**Europäisches Patentamt**

**European Patent Office**

**Office européen des brevets**

(11) Veröffentlichungsnummer: **0 374 770 B1**

(12) **EUROPÄISCHE PATENTSCHRIFT**

(45) Veröffentlichungstag der Patentschrift: **02.02.94**

(21) Anmeldenummer: **89123296.9**

(22) Anmeldetag: **15.12.89**

(51) Int. Cl.⁵: $B60C\ 23/20$

(54) Verfahren und Einrichtung zur Bestimmung der effektiven Lufttemperatur in mindestens einem der Luftreifen eines Fahrzeuges sowie deren Verwendung.

(30) Priorität: **19.12.88 DE 3842723**

(43) Veröffentlichungstag der Anmeldung:
**27.06.90 Patentblatt 90/26**

(45) Bekanntmachung des Hinweises auf die Patenterteilung:
**02.02.94 Patentblatt 94/05**

(84) Benannte Vertragsstaaten:
**DE FR GB IT SE**

(56) Entgegenhaltungen:
**EP-A- 0 045 401**
**EP-A- 0 187 694**
**GB-A- 2 052 121**
**GB-A- 2 171 525**

(73) Patentinhaber: **Bayerische Motoren Werke Aktiengesellschaft**
**Patentabteilung AJ-3**
**D-80788 München(DE)**

(72) Erfinder: **Rott, Erich**
**Dinkelscherbener Strasse 13**
**D-8900 Augsburg 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren sowie eine Einrichtung zur Bestimmung der effektiven Lufttemperatur in mindestens einem der Luftreifen eines Fahrzeuges, bei dem bzw. bei der die Temperatur in Nähe der Felgeninnenseite des betreffenden Fahrzeugrades gemessen wird.

Ein derartiges Verfahren sowie eine derartige Einrichtung werden bereits in bekannten Fahrzeugreifenluftdrucküberwachungseinrichtungen oder Fahrzeugreifenluftdruckregelungseinrichtungen eingesetzt.

So werden beispielsweise bei dem aus der DE-A-35 39 489 bekannten Verfahren zur Fahrzeugreifenluftdrucküberwachung die ermittelten Luftdruckwerte eines der Fahrzeugluftreifen mit Soll-Luftdruckwerten verglichen, die von der Lufttemperatur in den betreffenden Luftreifen des Fahrzeuges abhängig sind.

Bei allen bisher bekannten Fahrzeugreifenluftdrucküberwachungseinrichtungen bzw. Fahrzeugreifenluftdruckregelungseinrichtungen wird zur Bestimmung der Lufttemperatur in mindestens einem der Luftreifen eines Fahrzeuges die Temperatur in Nähe der Felgeninnenseite des betreffenden Fahrzeugrades durch einen dort angeordneten Temperatursensor gemessen. Diese Art der Bestimmung der Reifenlufttemperatur ist jedoch sehr ungenau, da die durch den an der Felgeninnenseite des betreffenden Fahrzeugrades angeordneten Temperatursensor gemessene Temperatur durch den Wärmeübergang von der Felgenaußenseite zur Felgeninnenseite des betreffenden Fahrzeugrades verfälscht wird. Dieser Wärmeübergang ist von der Temperatur an der Felgenaußenseite des betreffenden Fahrzeugrades abhängig, die wiederum durch die jeweilige Außentemperatur, d. h. durch die jeweilige Umgebungstemperatur des Fahrzeuges und durch die von der zugehörigen Fahrzeugbremsscheibe bzw. -trommel abgestrahlte Bremswärme bestimmt wird.

Es ist daher Aufgabe der Erfindung, ein Verfahren sowie eine Einrichtung eingangs genannter Art anzugeben, durch das bzw. durch die die effektive Lufttemperatur in mindestens einem der Luftreifen eines Fahrzeuges höchstgenau bestimmt werden kann.

Diese Aufgabe wird erfindungsgemäß dadurch gelöst, daß zusätzlich zur Temperatur in Nähe der Felgeninnenseite des betreffenden Fahrzeugrades die Temperatur in unmittelbarer Umgebung einer Fahrzeugbremsscheibe bzw. -trommel sowie die Temperatur in unmittelbarer Umgebung des Fahrzeuges gemessen werden und daß die effektive Lufttemperatur im betreffenden Fahrzeugluftreifen aus den gemessenen Werten für die Temperatur in Nähe der Felgeninnenseite, für die Temperatur in unmittelbarer Umgebung einer Fahrzeugbremsscheibe bzw. -trommel und für die Temperatur in unmittelbarer Umgebung des Fahrzeuges rechnerisch ermittelt wird.

Der auf diese Weise ermittelte Wert der effektiven Lufttemperatur im Fahrzeugluftreifen ist unabhängig von der Außentemperatur und damit von der Temperatur in unmittelbarer Umgebung des Fahrzeuges und ferner unabhängig von der Wärmemenge, die von der dem betreffenden Fahrzeugrad zugeordneten Fahrzeugbremsscheibe bzw. -trommel abgestrahlt wird. Dies wird dadurch erreicht, daß die Temperaturanteile der durch den an der Felgeninnenseite angeordneten Temperatursensor gemessenen Temperatur, die einerseits auf die Außentemperatur und andererseits auf die Wärmeabstrahlung der zugehörigen Fahrzeugbremsscheibe bzw. -trommel zurückzuführen sind, kompensiert werden.

Vorzugsweise wird die effektive Lufttemperatur im Fahrzeugluftreifen gemäß der mathematischen Formel

$$T_{RLeff} = T_I - f_1 (T_{UB}) + f_2 (T_{UF})$$

mit

$T_{RLeff}$ = effektive Lufttemperatur im Fahrzeugluftreifen

$T_I$ = Temperatur in Nähe der Felgeninnenseite des betreffenden Fahrzeugrades

$f_1$ = erste mathematische Funktion der Temperatur in unmittelbarer Umgebung einer Fahrzeugbremsscheibe bzw. -trommel

$f_2$ = zweite mathematische Funktion von der Temperatur in unmittelbarer Umgebung des Fahrzeuges

bestimmt.

Eine Einrichtung zur Durchführung des vorstehend beschriebenen Verfahrens weist neben einem an der Felgeninnenseite des betreffenden Fahrzeugrades angeordneten ersten Temperatursensor ferner einen zweiten Temperatursensor in unmittelbarer Umgebung einer Fahrzeugbremsscheibe bzw. -trommel, einen dritten Temperatursensor zur Erfassung der Umgebungstemperatur des Fahrzeuges und eine Berechnungseinheit zur Berechnung der effektiven Lufttemperatur im betreffenden Fahrzeugluftreifen auf.

Vorzugsweise sind die drei Temperatursensoren als Analog-Sensoren ausgebildet.

Nach einer Weiterbildung der Erfindung stimmen die thermischen Zeitkonstanten und die Fehlertoleranzen der drei Temperatursensoren zumindest nahezu überein. Bei derart ausgewählten Temperatursensoren kann die Berechnung der effektiven Lufttemperatur im Fahrzeugluftreifen auf sehr einfache Weise erfolgen.

Gemäß einer Weiterbildung der Erfindung sind der zweite Temperatursensor und der dritte Temperatursensor auf derselben Fahrzeugseite angeordnet.

Vorzugsweise ist der zweite Temperatursensor im Radkasten eines Fahrzeugvorderrades angeordnet. Bei dieser Anordnung des zweiten Temperatursensors kann die Temperatur in unmittelbarer Umgebung einer Fahrzeugbremsscheibe bzw. -trommel sehr gut erfaßt werden.

Vorzugsweise ist der zweite Temperatursensor derart am Fahrzeug angeordnet, daß der auf die Wärmeabstrahlung der Fahrzeugbremsscheibe bzw. -trommel zurückzuführende Temperaturanteil der Temperatur in Nähe der Felgeninnenseite des betreffenden Fahrzeugrades durch den Wert der Differenz der Temperatur in unmittelbarer Umgebung der Fahrzeugbremsscheibe bzw. -trommel minus der Temperatur in unmittelbarer Umgebung des Fahrzeuges vollständig kompensiert wird. Bei einer derartigen Anordnung des zweiten Temperatursensors am Fahrzeug kann die effektive Lufttemperatur eines Fahrzeugluftreifens durch Subtraktion der Temperatur in unmittelbarer Umgebung einer Fahrzeugbremsscheibe bzw. -trommel vom sowie durch Addition der Temperatur in unmittelbarer Umgebung des Fahrzeuges zum Wert der Temperatur in Nähe der Felgeninnenseite des betreffenden Fahrzeugrades bestimmt werden.

Es hat sich ferner als vorteilhaft erwiesen, wenn der dritte Temperatursensor in einem der vorderen oder hinteren Stoßstangenseitenteile angeordnet ist. Es kann auf diese Weise sehr gut gewährleistet werden, daß der dritte Temperatursensor einerseits gegen Regen und Schmutzwasser, gegen direkte Sonneneinstrahlung sowie gegen Wärmeabstrahlung der Brennkraftmaschine des Fahrzeuges abgeschirmt und andererseits dem Fahrtwind zugänglich ist.

Vorzugsweise werden das vorstehend beschriebene Verfahren sowie die vorstehend beschriebene Einrichtung für eine Fahrzeugreifenluftdrucküberwachungseinrichtung bzw. für eine Fahrzeugreifenluftdruckregelungseinrichtung verwendet.

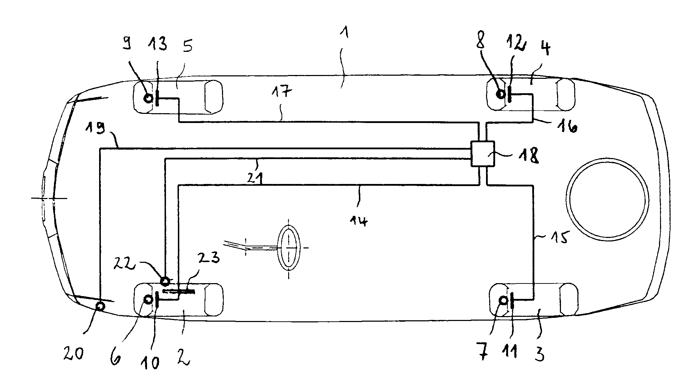

Im folgenden wird ein Ausführungsbeispiel der erfindungsgemäßen Einrichtung anhand der einzigen Figur näher erläutert.

Die einzige Figur zeigt in der Draufsicht die Umrisse eines Kraftfahrzeuges, das mit der erfindungsgemäßen Einrichtung ausgerüstet ist.

Bei dem in der Figur schematisch dargestellten Kraftfahrzeug 1 ist an der Felgeninnenseite der vier Fahrzeugräder 2, 3, 4 und 5 jeweils ein Temperatursensor 6, 7, 8 und 9 vorgesehen. Durch diese Temperatursensoren 6, 7, 8 und 9 wird bei den vier Fahrzeugrädern 2, 3, 4 und 5 jeweils die Temperatur im jeweiligen Luftreifen in Nähe der jeweiligen Felgeninnenseite gemessen. Die gemessenen Temperaturwerte werden jeweils vom Fahrzeugrad 2, 3, 4 oder 5 auf den fahrzeugfesten Teil 10, 11, 12, 13 einer jeweiligen Übertrager-Anordnung übertragen und von dort über jeweils eine Verbindungsleitung 14, 15, 16 oder 17 zur Berechnungseinheit 18 weitergeleitet. Diese Berechnungseinheit 18 ist ferner über die Verbindungsleitung 19 mit einem Temperatursensor 20 zur Erfassung der Umgebungstemperatur des Fahrzeuges 1 verbunden. Schließlich ist die Berechnungseinheit 18 auch noch über die Verbindungsleitung 21 mit einem im Radkasten des linken Fahrzeugvorderrades 2 angeordneten Temperatursensor 22 verbunden, mit dem die von der Bremsscheibe 23 abgestrahlte Wärme erfaßt wird. Der Berechnungseinheit 18 werden damit neben den Werten der Temperatur in Nähe der Felgeninnenseite der einzelnen Fahrzeugräder 2, 3, 4 und 5 zusätzlich noch die Werte für die Umgebungstemperatur und für die Temperatur in unmittelbarer Umgebung mindestens einer Fahrzeugbremsscheibe 23 zugeführt. Aus diesen gemessenen Temperaturwerten wird dann in der Berechnungseinheit 18 der Wert der effektiven Lufttemperatur in den einzelnen Luftreifen der Fahrzeugräder 2, 3, 4 und 5 hochgenau berechnet.

Wird beispielsweise, wie in der Figur dargestellt, nur die von einer der beiden Bremsscheiben, hier also die von der Bremsscheibe 23 abgestrahlte Wärme durch einen einzigen Temperatursensor, hier durch den Temperatursensor 22 erfaßt, so kann die jeweilige Wärmeabstrahlung der übrigen Bremsscheiben bzw. -trommeln des Kraftfahrzeuges 1 als Funktion der durch den Temperatursensor 22 erfaßten Wärmeabstrahlung der Bremsscheibe 23 durch die Berechnungseinheit 18 berechnet werden. Der in der Berechnungseinheit 18 abgespeicherte funktionale Zusammenhang zwischen der vom Temperatursensor 22 erfaßten Wärmeabstrahlung und der jeweiligen Wärmestrahlung der übrigen Bremsscheiben bzw. -trommeln kann beispielsweise durch Bremsversuche bzw. aufgrund der bekannten Bremskraftverteilung bestimmt werden.

## Patentansprüche

1. Verfahren zur Bestimmung der effektiven Lufttemperatur in mindestens einem der Luftreifen eines Fahrzeuges, bei dem die Temperatur in Nähe der Felgeninnenseite des betreffenden Fahrzeugrades gemessen wird, dadurch gekennzeichnet, daß zusätzlich zur Temperatur ($T_I$) in Nähe der Felgeninnenseite des betreffenden Fahrzeugrades (2, 3, 4, 5) die Temperatur ($T_{UB}$) in unmittelbarer Umgebung einer Fahrzeugbremsscheibe bzw. -trommel (23) sowie die Temperatur ($T_{UF}$) in unmittelbarer Umgebung des Fahrzeuges (1) gemessen werden und daß aus den gemessenen Temperaturwerten die effektive Lufttemperatur ($T_{RLeff}$) im betreffenden Fahrzeugluftreifen rechnerisch bestimmt wird.

2.  Verfahren nach Anspruch 1,
    dadurch gekennzeichnet, daß die effektive Lufttemperatur ($T_{RLeff}$) im betreffenden Fahrzeugluftreifen gemäß der mathematischen Formel

    $$T_{RLeff} = T_I - f_1 (T_{UB}) + f_2 (T_{UF})$$

    mit

    $T_{RLeff}$ =   effektive Lufttemperatur im betreffenden Fahrzeugluftreifen

    $T_I$ =   Temperatur in Nähe der Felgeninnenseite des betreffenden Fahrzeugrades

    $f_1$ =   erste mathematische Funktion von der Temperatur $T_{UB}$ in unmittelbarer Umgebung einer Fahrzeugbremsscheibe bzw. -trommel

    $f_2$ =   zweite mathematische Funktion von der Temperatur $T_{UF}$ in unmittelbarer Umgebung des Fahrzeuges

    bestimmt wird.

3.  Einrichtung zur Durchführung des Verfahrens nach einem der Ansprüche 1 oder 2, mit einem an der Felgeninnenseite des betreffenden Fahrzeugrades angeordneten ersten Temperatursensor,
    gekennzeichnet durch einen zweiten Temperatursensor (22) in unmittelbarer Umgebung einer Fahrzeugbremsscheibe bzw. -trommel (23), durch einen dritten Temperatursensor (20) zur Erfassung der Umgebungstemperatur ($T_{UF}$) des Fahrzeuges (1) und durch eine Berechnungseinheit (18) zur Berechnung der effektiven Lufttemperatur ($T_{RLeff}$) im betreffenden Fahrzeugluftreifen.

4.  Einrichtung nach Anspruch 3,
    dadurch gekennzeichnet, daß die drei Temperatursensoren (6, 7, 8, 9, 20, 22) jeweils ein analoges Ausgangssignal abgeben.

5.  Einrichtung nach Anspruch 3 oder 4,
    dadurch gekennzeichnet, daß die drei Temperatursensoren (6, 7, 8, 9, 20, 22) hinsichtlich ihrer thermischen Zeitkonstanten und ihrer Fehlertoleranzen übereinstimmen.

6.  Einrichtung nach einem der Ansprüche 3 bis 5,
    dadurch gekennzeichnet, daß der zweite Temperatursensor (22) und der dritte Temperatursensor (20) auf derselben Fahrzeugseite angeordnet sind.

7.  Einrichtung nach einem der Ansprüche 3 bis 6,
    dadurch gekennzeichnet, daß der zweite Temperatursensor (22) im Radkasten eines Fahrzeugvorderrades (2) angeordnet ist.

8.  Einrichtung nach einem der Ansprüche 3 bis 7,
    dadurch gekennzeichnet, daß der zweite Temperatursensor (22) derart am Fahrzeug (1) angeordnet ist, daß der auf die Wärmeabstrahlung der Fahrzeugbremsscheibe bzw. -trommel (23) zurückzuführende Temperaturanteil der Temperatur ($T_I$) in Nähe der Felgeninnenseite des betreffenden Fahrzeugrades (2, 3, 4, 5) durch den Wert der Differenz der Temperatur ($T_{UB}$) in unmittelbarer Umgebung der Fahrzeugbremsscheibe bzw. -trommel (23) minus der Temperatur ($T_{UF}$) in unmittelbarer Umgebung des Fahrzeuges (1) vollständig kompensiert wird.

9.  Einrichtung nach einem der Ansprüche 3 bis 8,
    dadurch gekennzeichnet, daß der dritte Temperatursensor (20) in einem der vorderen oder hinteren Stoßstangenseitenteile des Fahrzeuges (1) angeordnet ist.

10. Einrichtung nach einem der Ansprüche 3 bis 9,
    dadurch gekennzeichnet, daß der dritte Temperatursensor (20) einerseits gegen Regen und Spritzwasser, gegen direkte Sonneneinstrahlung sowie gegen Wärmeabstrahlung der Brennkraftmaschine des Fahrzeuges (1) abgeschirmt und andererseits dem Fahrtwind zugänglich ist.

11. Verwendung des Verfahrens und der Einrichtung nach einem der vorhergehenden Ansprüche für eine Fahrzeugreifenluftdrucküberwachungseinrichtung bzw. für eine Fahrzeugreifenluftdruckregelungseinrichtung.

**Claims**

1.  A method for the determination of the effective air temperature in at least one of the pneumatic tyres of a vehicle, in which the temperature in the proximity of the inner side of the rim of the respective vehicle wheel is measured,
    characterised in that the temperature ($T_{UB}$) in the immediate proximity of a vehicle brake disc or drum (23) and the temperature ($T_{UF}$) of the environment surrounding the vehicle (1) are measured in addition to the temperature

($T_I$) in the proximity of the inner side of the rim of the particular vehicle wheel (2, 3, 4, 5), and that the effective air temperature ($T_{RLeff}$) in the respective vehicle pneumatic tyres is derived from the measured temperature values by computation.

2. A method according to Claim 1, characterised in that the effective air temperature ($T_{RLeff}$) in the respective vehicle pneumatic tyres is calculated according to the mathematical formula

$$T_{RLeff} = T_I - f_1 (T_{UB}) + f_2 (T_{UF})$$

where

$T_{RLeff}$ = the effective air temperature in the particular vehicle pneumatic tyres

$T_I$ = the temperature in the proximity of the inner side of the rim of the particular vehicle wheel

$f_1$ = a first mathematical function of the temperature $T_{UB}$ in the immediate proximity of a vehicle brake disc or drum

$f_2$ = a second mathematical function of the temperature $T_{UF}$ in the environment surrounding the vehicle.

3. A device for performance of the method according to either Claim 1 or 2, with a first temperature sensor arranged on the inner side of the rim of the particular vehicle wheel, characterised by a second temperature sensor (22) in the immediate proximity of a vehicle brake disc or drum (23), by a third temperature sensor (20) to record the ambient temperature ($T_{UF}$) of the vehicle (1) and by a computing unit (18) for calculation of the effective air temperature ($T_{RLeff}$) in the respective vehicle pneumatic tyres.

4. A device according to Claim 3, characterised in that the three temperature sensors (6, 7, 8, 9, 20, 22) in each case deliver an analog output signal.

5. A device according to either Claim 3 or 4, characterised in that the three temperature sensors (6, 7, 8, 9, 20, 22) correspond in terms of their time constants and their error tolerances.

6. A device according to any one of Claims 3 to 5, characterised in that the second temperature sensor (22) and the third temperature sensor (20) are arranged on the same side of the vehicle.

7. A device according to any one of Claims 3 to 6, characterised in that the second temperature sensor (22) is arranged in the wheel housing of a front wheel (2) of the vehicle.

8. A device according to any one of Claims 3 to 7, characterised in that the second temperature sensor (22) is arranged on the vehicle (1) such that that component of the temperature ($T_I$) in the proximity of the inner side of the rim of the particular vehicle wheel (2, 3, 4, 5) which is ascribable to the heat radiation from the vehicle brake disc or drum (23) can be fully compensated for by subtracting the value of the temperature ($T_{UF}$) in the immediate environment of the vehicle from the temperature ($T_{UB}$) in the immediate proximity of the vehicle brake disc or drum (23).

9. A device according to any one of Claims 3 to 8, characterised in that the third temperature sensor (20) is arranged in one of the lateral sections of the front or rear bumper of the vehicle (1).

10. A device according to any one of Claims 3 to 9, characterised in that the third temperature sensor (20) is on the one hand protected from rain, road spray, direct sunlight and heat radiation from the internal combustion engine of the vehicle (1) and on the other hand is accessible to the driving wind.

11. The use of the method and device according to one of the above Claims in a vehicle tyre air pressure monitoring device or in a vehicle tyre air pressure regulating device.

**Revendications**

1. Procédé pour déterminer la température effective de l'air dans au moins un pneumatique d'un véhicule, selon lequel on mesure la température à proximité de la face intérieure de la jante de la roue de véhicule concernée,
procédé caractérisé en ce qu'en plus de la température ($T_I$) à proximité du côté intérieur de la jante de la roue de véhicule concernée (2, 3, 4, 5), on mesure la température ($T_{UB}$) dans l'environnement immédiat d'un disque ou tambour de frein de roue (23) ainsi que la température ($T_{UF}$) dans l'environnement immédiat du véhicule (1), et à partir des valeurs de température mesurées on détermine la température effective de l'air ($T_{RLeff}$) par le calcul dans le pneumatique concerné.

2. Procédé selon la revendication 1, caractérisé en ce qu'on calcule la température effective de l'air ($T_{RLeff}$) dans le pneumatique concerné du véhicule selon la formule mathématique :

$$T_{RLeff} = T_I - f_1 (T_{UB}) + f_2 (T_{UF})$$

dans cette formule :

  $T_{RLeff}$ = température effective de l'air dans le pneumatique.

  $T_I$ = température à proximité du côté intérieur de la jante de la roue correspondante du véhicule.

  $f_1$ = première fonction mathématique de la température au voisinage immédiat d'un disque ou tambour de frein de roue.

  $f_2$ = seconde fonction mathématique de la température au voisinage immédiat du véhicule.

3. Dispositif pour la mise en oeuvre du procédé selon l'une des revendications 1 ou 2, avec un premier capteur de température placé sur le côté intérieur de la jante d'une roue de véhicule concerné, caractérisé par un second capteur de température (22) placé dans l'environnement immédiat d'un disque ou tambour de frein (23), par un troisième capteur de température (20) qui détecte la température ambiante ($T_{UF}$) du véhicule (1) et par une unité de calcul (18) qui calcule la température effective de l'air ($T_{RLeff}$) dans le pneumatique concerné.

4. Dispositif selon la revendication 3, caractérisé en ce que les trois capteurs de température (6, 7, 8, 9, 20, 22) fournissent chaque fois un signal de sortie analogique.

5. Dispositif selon la revendication 3 ou 4, caractérisé en ce que les trois capteurs de température (6, 7, 8, 9, 20, 22) se correspondent par leur constante de temps thermique et leurs tolérances aux erreurs.

6. Dispositif selon l'une des revendications 3 à 5, caractérisé en ce que le second capteur de température (22) et le troisième capteur de température (20) sont du même côté du véhicule.

7. Dispositif selon l'une des revendications 3 à 6, caractérisé en ce que le second capteur de température (22) est placé dans le caisson d'une roue avant (2) du véhicule.

8. Dispositif selon l'une des revendications 3 à 7, caractérisé en ce que le second capteur de température (22) est placé dans le véhicule (2) de manière à compenser complètement la composante de la température ($T_I$) à proximité du côté intérieur de la jante de la roue de véhicule concernée (2, 3, 4, 5), provenant du rayonnement thermique du disque ou du frein de roue (23), par la valeur de la différence de la température ($T_{UB}$) dans l'environnement immédiat du disque ou tambour de frein de roue (23) et de la température ($T_{UF}$) dans l'environnement immédiat du véhicule (1).

9. Dispositif selon l'une des revendications 3 à 8, caractérisé en ce que le troisième capteur de température (20) est prévu dans une partie latérale du pare-choc avant ou arrière du véhicule (1).

10. Dispositif selon l'une des revendications 3 à 9, caractérisé en ce que le troisième capteur de température (20) est monté de manière protégée d'une part contre la pluie et les projections d'eau et contre le rayonnement direct du soleil ainsi que contre le rayonnement thermique du moteur à combustion interne du véhicule (1), tout en étant accessible au vent de circulation.

11. Application du procédé selon l'une des revendications précédentes à une installation de surveillance ou de régulation de la pression des pneumatiques d'un véhicule.